# FASCICULE DE BREVET EUROPEEN

(11) **EP 3 832 402 B1**
(45) Date de publication et mention de la délivrance du brevet: **10.09.2025**
(21) Numéro de dépôt: 19214190.1
(22) Date de dépôt: 06.12.2019
(51) Int. Cl.: G04G 21/00, G04G 9/00, G06F 1/32

(54) **PROCÉDÉ DE CONNEXION SÉCURISÉE D'UNE MONTRE À UN SERVEUR DISTANT**
GESICHERTES VERBINDUNGSVERFAHEN EINER ARMBANDUHR MIT EINEM FERNSERVER
METHOD FOR SECURE CONNECTION OF A WATCH TO A REMOTE SERVER

(43) Date de publication de la demande: 09.06.2021
(73) Titulaire: Tissot S.A., 2400 Le Locle (CH)
(72) Inventeur: FRANZI, Edoardo, 1400 Cheseaux-Noréaz (CH)
(74) Mandataire: ICB SA

(56) Documents cités:
- KR-A- 20170 001 219
- US-A1- 2015 242 605
- US-A1- 2017 039 535
- US-A1- 2018 019 994
- US-B1- 6 720 860

## Description

### Domaine technique

La présente invention concerne un procédé de connexion sécurisée d'une montre à un serveur distant et un système mettant en œuvre un tel procédé.

L'invention concerne également un programme d'ordinateur.

### Art antérieur

Une montre comprend un ensemble de fonctions qui peut être utilisé par le porteur. De telles fonctions peuvent permettre d'accéder à des serveurs distants mettant en œuvre des prestations de service telles que des prestations bancaires, des prestations commerciales (boutiques en ligne, entreprises de commerce électronique), des prestations de messagerie électronique ou de messagerie instantanée. Dans un tel contexte, le porteur de la montre doit gérer et stocker un nombre croissant d'identifiants, de mots de passe et de codes d'accès qui sont des éléments d'authentification. De tels éléments d'authentification sont souvent à porter du porteur lorsqu'il doit initier une connexion à un serveur distant pour bénéficier d'une prestation de service. Pour se faire, il est courant que le porteur à défaut de mémoriser toutes ces données confidentielles, préfère les regrouper sur un support papier ou encore dans un fichier informatique standard de type tableur archivé sur des supports permettant le stockage de données numériques, que ce soit des disques durs, de la mémoire flash, une clé USB, etc.. Cette situation présente l'inconvénient que les documents/fichiers contenant ces éléments d'authentification peuvent être stockés dans un environnement peu ou pas protégé. Cela introduit une faille de sécurité importante dans la gestion des éléments d'authentification. Les documents US 2015/242605 A1 et US 2018/019994 divulguent des procédés d'authentification sur des appareils portables (montres, smartphones), utilisant des capteurs biométriques et non biométriques pour vérifier l'identité de l'utilisateur en continu.

Dans ces conditions, on comprend qu'il existe un besoin de trouver une solution alternative, notamment qui ne présente pas les inconvénients de l'art antérieur.

### Résumé de l'invention

Un but de la présente invention est par conséquent de proposer un procédé de connexion sécurisée d'une montre à un serveur distant qui est fiable et robuste.

Dans ce dessein, le procédé de connexion sécurisée d'une montre à un serveur distant d'un fournisseur de prestation de service selon la revendication 1.

Dans d'autres modes de réalisation :
- l'étape de transmission comprend une sous-étape de sélection de l'élément d'authentification relatif à ladite fonction sélectionnée en prévision de son envoi au serveur distant et ce, parmi des éléments d'authentification archivés dans les éléments de mémoire de l'unité de traitement de la montre ;
- l'étape de réalisation d'une authentification comprend une sous-étape de comparaison entre l'élément d'authentification reçu de la montre et un élément d'authentification de référence archivé dans le serveur ;
- l'étape d'identification comprend une sous-étape de présentation d'une représentation graphique sur une interface de diffusion d'une information visuelle de ladite montre ;
- la sous-étape de présentation comprend une phase de génération de l'affichage de la représentation graphique sur l'interface de diffusion d'une information visuelle ;
- la sous-étape de présentation comprend une phase de déclenchement d'un compte à rebours dès lors que la phase de génération est réalisée ;
- l'étape d'identification comprend une sous-étape de sélection dans un intervalle de temps limité d'une séquence d'au moins deux portions d'identification comprises dans ladite représentation graphique visant à identifier ledit porteur, ladite séquence correspondant à un code d'identification du porteur ;
- l'étape d'identification comprend une sous-étape validation de la séquence sélectionnée ;
- la sous-étape validation comprend une phase de contrôle que la sélection de la séquence de portions d'identification a été réalisée dans l'intervalle de temps limité défini par un compte à rebours.

L'invention concerne aussi un système de connexion sécurisée d'une montre à un serveur distant mettant en œuvre ce procédé, la montre comprenant les éléments suivants reliés entre eux : une unité de traitement, une interface de saisie, une interface de diffusion d'une information visuelle et une interface de communication sans fil pour des échanges de données avec ledit serveur distant.

L'invention concerne également un programme d'ordinateur comprenant des instructions de code de programme pour l'exécution des étapes du procédé lorsque ledit programme est exécuté par les unités de traitement de la montre et d'un serveur distant en connexion avec ladite montre.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'un système de connexion sécurisée d'une montre à un serveur distant, selon un mode de réalisation de l'invention, et
- la figure 2 est un logigramme relatif à un procédé de connexion sécurisée de la montre au serveur distant, selon le mode de réalisation de l'invention.

### Description détaillée de l'invention

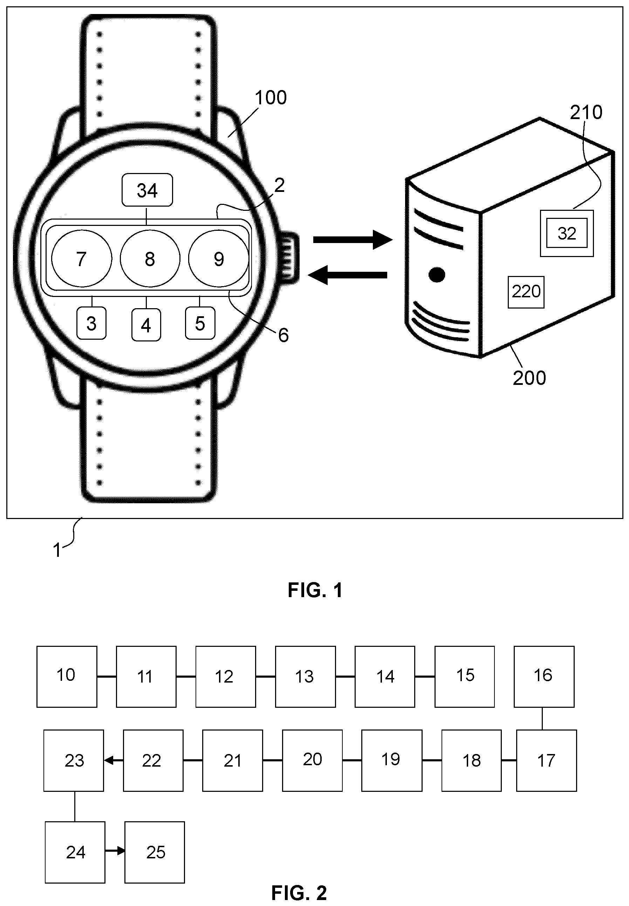

Sur la figure 1 est représenté un système 1 de connexion sécurisée d'une montre à un serveur distant 200. Dans ce système 1, la montre 100 est de préférence une montre 100 mécanique connectée à affichage hybride. Dans ce contexte, la montre 100 comprend un corps tel qu'une boîte de montre, et un élément d'attache tel qu'un bracelet permettant de fixer ce corps par exemple au poignet du porteur. Cette montre 100 comprend plus précisément de manière non limitative et/ou non exhaustive :
- une unité de traitement 2 comportant des ressources matérielles et logicielles en particulier au moins un processeur coopérant avec des éléments de mémoire 6;
- une interface de diffusion d'une information visuelle 3 telle qu'un cadran d'affichage hybride pourvu d'une première composante d'affichage analogique et d'une deuxième composante d'affichage numérique et/ou alphanumérique ;
- une interface de diffusion d'une information sonore 4 telle qu'un haut-parleur ;
- une interface de communication sans fil 5 (par exemple cellulaire, WLAN Bluetooth, etc.), et
- une interface de saisie 34 tel qu'un clavier ou encore une interface tactile comprise par exemple dans l'interface de diffusion d'une information visuelle 3.

Dans cette montre 100, l'unité de traitement 2 est reliée entre autres aux interfaces de diffusion d'une information visuelle et sonore 3, 4, à l'interface de saisie 34 et l'interface de communication sans fil 5.

Dans ce système 1, le serveur 200 comprend une unité de traitement 210 et une interface de communication 220. Ce serveur 200 est un serveur distant d'un fournisseur de prestation de service par exemple un serveur d'un fournisseur de prestations bancaires ou de prestations commerciales (boutiques en ligne, entreprises de commerce électronique), de prestations de messagerie électronique ou de messagerie instantanée. Dans ce contexte, l'unité de traitement 210 de ce serveur 200 comprend des éléments de mémoire comportant un élément d'authentification de référence 32. Cet élément d'authentification de référence 32 est apte à participer à la réalisation d'une connexion sécurisée entre le serveur distant 200 et ladite montre 100 et peut comprendre des clés, certificats, codes d'authentification, mots de passe et codes personnels, etc...

Dans cette montre, les éléments de mémoire 6 de l'unité de traitement 2 de la montre 100 comprennent des données relatives à des éléments d'authentification 9 spécifiques à chaque serveur distant 200 auxquels la montre 100 est amenée à se connecter. Autrement dit ces éléments d'authentification 9 son propre au porteur et/ou à la montre 100, et permettent ainsi au porteur de se connecter au serveur 200 qu'il désire par l'intermédiaire d'une sélection d'une fonction de la montre 100.

Ces éléments de mémoire 6 de l'unité de traitement 2 comprennent aussi au moins une représentation graphique 7 permettant d'identifier le porteur comme on le verra par la suite. Cette représentation graphique 7 peut par exemple être une image comprenant au moins un objet. A titre d'exemple, cette image définit une scène comprenant une pluralité d'objets tels que des habitations, des véhicules et/ou un astre comme la lune, etc... On comprend bien évidemment que cette image peut définir d'autres types de scène comportant au moins un objet. Ces éléments de mémoire 6 comportent également des données relatives à une séquence de référence 8 comprenant des portions d'identification de référence de cette représentation graphique 7, lesdites portions ayant été préalablement sélectionnées par le porteur de la montre 100 lors d'un processus de configuration relative à l'identification du porteur.

Le système 1 est apte à mettre en œuvre un procédé de connexion sécurisée au serveur distant 200 d'un fournisseur de prestation de service, représenté sur la figure 2. Un tel serveur 200 d'un fournisseur de prestation de service peut être par exemple un serveur d'un fournisseur de prestations bancaires ou de prestations commerciales (boutiques en ligne, entreprises de commerce électronique), de prestations de messagerie électronique ou de messagerie instantanée.

Ce procédé comprend une étape d'authentification 10 du porteur de la montre 100 autorisant un accès à l'utilisation de fonctions de cette montre 100. Cette étape d'authentification 10 permet donc d'identifier de manière certaine le porteur de la montre afin qu'il puisse avoir accès à l'utilisation de toutes les fonctions de cette montre 100. Autrement dit, elle permet au porteur d'apporter la preuve de son identité en prévoyant la saisie d'un code d'authentification ou d'un code secret par le biais d'une interaction entre le porteur et l'interface de saisie 34.

En complément, on comprend que les fonctions peuvent être mises en œuvre par des programmes informatiques exécutés par l'unité de traitement 2 de la montre 100 dès lors que ces programmes sont activés/sélectionnés suite à une interaction entre le porteur et l'interface de saisie 34 de cette montre 100. Ces programmes informatiques ainsi exécutés permettent au porteur de bénéficier de prestations de service par exemple de type bancaire, commerciale ou encore de messagerie instantanée ou électronique.

A la suite de cette étape d'authentification 10, le procédé comprend une étape de sélection 11 d'une desdites fonctions à partir de l'interface de saisie 34 de ladite montre 100 visant à réaliser un établissement d'une connexion entre ladite montre 100 et le serveur distant 200. On comprend que les fonctions peuvent être mises en œuvre par des programmes informatiques exécutés par l'unité de traitement 2 de la montre 100 dès lors que ces fonctions qui sont affichées sur/dans l'interface de diffusion d'une information visuelle 3, sont activées/sélectionnées suite à une interaction entre le porteur et l'interface de saisie 34 de cette montre 100. Ces programmes informatiques ainsi exécutés permettent au porteur de bénéficier de prestations de service par exemple de type bancaire, commerciale ou encore de messagerie instantanée ou électronique.

Le procédé comprend ensuite une étape d'identification 12 du porteur de la montre 100 à partir d'une interaction entre le porteur de cette montre et une représentation graphique comprise dans ladite montre 100 plus particulièrement une représentation graphique affichée sur/dans l'interface de diffusion d'une information visuelle 3 de ladite montre 100. Un telle étape 12, selon l'invention revendiquée, est effectuée systématiquement à la suite de la sélection d'une fonction afin notamment de permettre à l'unité de traitement 2 de contrôler que le porteur de la montre 100 est toujours en possession de cette dernière et qu'il est bien à l'origine de la sélection de la fonction. Cette étape 12 comprend une sous-étape de présentation 13 d'une représentation graphique 7 sur/dans l'interface de diffusion d'une information visuelle 3 de ladite montre 100. Cette sous-étape 13 comporte une phase de génération 14 de l'affichage, sur/dans l'interface de diffusion d'une information visuelle 3, de la représentation graphique 7 prévue pour la mise en œuvre de cette identification. Cette phase 14 peut comprendre une sous-phase de sélection par le porteur parmi un échantillon d'au moins deux représentations graphiques 7 affichées sur l'interface de diffusion d'une information visuelle 3, de la représentation graphique 7 prévue pour la mise en œuvre de cette identification. On notera que le porteur est le seul à connaitre la représentation graphique 7 qu'il a choisi lors d'un processus de configuration relative à cette identification.

Cette sous-étape de présentation 13 comprend ensuite une phase de déclenchement 15 d'un compte à rebours dès lors que la phase de génération 14 est réalisée. Autrement dit, le compte à rebours préconfigurable, est déclenché une fois la représentation graphique 7 est présentée sur l'interface de diffusion 3. Une telle phase 15 participe à partir d'un intervalle de temps limité défini par ce compte à rebours, à décompter le temps estimé nécessaire à la saisie de la séquence de portions d'identification de la représentation graphique 7 affichée sur/dans sur l'interface de diffusion 3.

Par la suite, l'étape d'identification 12 comprend une sous-étape de sélection 16 dans l'intervalle de temps limité d'une séquence d'au moins deux portions d'identification de ladite représentation graphique 7 visant à identifier ledit porteur, ladite séquence correspondant à un code d'identification du porteur. De telles portions d'identification ne sont pas directement visibles dans la représentation graphique 7 présentée sur/dans l'interface de diffusion 3. Dans ces conditions, la sous-étape de sélection 16 comprend une phase de visualisation 17 d'au moins une desdites portions d'identification de la séquence dans ladite représentation graphique 7. Cette phase de visualisation 17 comprend une sous-phase de sélection d'au moins une zone d'intérêt de la représentation graphique 7 susceptible de comprendre ladite au moins une portion d'identification. Lors de cette sous-phase, le porteur sélectionne par exemple une première zone d'intérêt ou une deuxième zone d'intérêt en effectuant un agrandissement de cette première zone ou cette deuxième zone à partir de l'interface de saisie 35. Une fois cette première ou deuxième zone d'intérêt sélectionnée les portions d'identification deviennent alors visibles. Dans cette configuration, chaque portion d'identification utile pour la réalisation/constitution de la séquence peut être sélectionnée à partir de l'interface de saisie 35.

Il convient de remarquer que la séquence comprend un nombre ordonné de portions d'identification et que la zone d'intérêt sélectionnée peut comprendre par exemple trois portions d'identification dont seulement deux sont ordonnées successivement l'une après l'autre dans la séquence. Dans ce contexte, la portion d'identification restante requiert pour faire partie de la séquence, la sélection d'une portion d'identification comprise dans une autre zone d'intérêt de la représentation graphique 7.

Ensuite, l'étape d'identification 12 comprend une sous-étape de validation 18 de la séquence sélectionnée. Cette sous-étape de validation 18 comprend une phase de contrôle 19 que la sélection de la séquence de portions d'identification a été réalisée dans l'intervalle de temps limité défini par le compte à rebours. Dans la mesure où cette sélection n'a pas été réalisée dans l'intervalle de temps limité, la sous-étape de validation 18 comprend une phase de renouvellement 20 des sous-étapes de présentation 13 et de sélection 16. Si par la suite, la sélection de la séquence n'a de nouveau pas été réalisée dans l'intervalle de temps limité, l'établissement de la connexion au serveur distant est suspendu voire supprimée. De plus, l'accès à la montre 100 est aussi supprimé et en particulier l'accès aux fonctions de cette montre 100. Dans ce contexte, le porteur de la montre est invité à s'authentifier de nouveau afin d'apporter la preuve de son identité par la saisie d'un code d'authentification ou d'un code secret et ce, par le biais d'une interaction entre le porteur et l'interface de saisie 34.

Dans la mesure où cette sélection a été réalisée dans cet intervalle de temps limité, la sous-étape de validation 18 comprend alors une phase de comparaison 21, mise en œuvre par l'unité de traitement 2, entre ladite séquence sélectionnée et la séquence de référence 8. Cette phase de comparaison 21 comprend une sous-phase de rejet de l'identification du porteur si ladite séquence est sensiblement différente ou différente de la séquence de référence 8. Dans ce cas de figure, l'établissement de la connexion au serveur distant est suspendu voire supprimée. De plus, l'accès à la montre 100 est aussi supprimé et en particulier l'accès aux fonctions de cette montre 100. Dans ce contexte, le porteur de la montre est invité à s'authentifier de nouveau afin d'apporter la preuve de son identité par la saisie d'un code d'authentification ou d'un code secret et ce, par le biais d'une interaction entre le porteur et l'interface de saisie 34. En effet, le porteur et propriétaire de la montre 100 peut ne plus être en sa possession.

A l'inverse, la phase de comparaison 21 comprend aussi une sous-phase d'identification du porteur avec succès si ladite séquence est sensiblement similaire ou similaire à la séquence de référence 8. Dans ce cas, le procédé prévoit alors la mise en œuvre d'une étape de transmission 22 audit serveur distant 200 de l'élément d'authentification relatif à la fonction sélectionnée dès lors que le porteur est identifié, ledit élément d'authentification étant spécifiquement défini pour participer à une authentification du porteur auprès du serveur distant 200. Cette étape 22 comprend une sous-étape de sélection 23 de l'élément d'authentification relatif à ladite fonction sélectionnée en prévision de son envoi au serveur distant 200. Lors de cette sous-étape 23, la fonction sélectionnée est identifiée, et sur la base de cette identification une sélection de l'élément d'authentification est effectuée parmi les l'éléments d'authentification archivés dans les éléments de mémoire 6 de l'unité de traitement 2 de la montre 100. Ainsi que nous l'avons déjà évoqué précédemment, les éléments d'authentification 9 peuvent être des clés, certificats, codes d'authentification, mots de passe et codes personnels qui sont chacun dédiés à l'authentification du porteur de la montre 200 auprès du fournisseur de prestation service correspondant et donc auprès du serveur distant compris dans une plateforme technique de ce fournisseur. On comprend ici, que l'élément d'authentification est dédié à une authentification du porteur auprès d'un serveur distant d'un fournisseur de prestation de service donné. En complément, les éléments d'authentification sont archivés dans l'éléments de mémoire 6 de l'unité de traitement 2 de la montre 100 en étant associés chacun à un élément d'identification numérique d'une fonction correspondante.

Le procédé comprend ensuite une étape de réalisation d'une authentification 24 du porteur par le serveur distant 200 à partir dudit élément d'authentification en vue d'autoriser un échange de données entre la montre 100 et ce serveur distant 200. Dans ce contexte, on comprend que cet échange de données qui est ici autorisé correspond aux données échangées entre la montre 100 et le serveur 200 dans le cadre de la prestation de service dont peut bénéficier le porteur dès lors qu'il est authentifié auprès du serveur distant 200 donc auprès du prestataire de service. Une telle étape 24 comprend une sous-étape de comparaison 25, réalisée par l'unité de traitement 210 du serveur 200, entre l'élément d'authentification reçu de la montre et un élément d'authentification de référence 32 archivé dans le serveur 200. Cette sous-étape de comparaison 25 comprend une phase de rejet de l'identification du porteur 22 si l'élément d'authentification est sensiblement différent ou différent de l'élément d'authentification de référence 32. Dans ce cas de figure, l'établissement de la connexion au serveur distant 200 est suspendu voire supprimée.

La sous-étape de comparaison 25 comprend aussi une phase d'identification du porteur avec succès si l'élément d'authentification est sensiblement similaire ou similaire à l'élément d'authentification de référence 32. Dans ce contexte, un échange de données entre la montre 100 et ce serveur distant 200 en lien avec la prestation de service est alors autorisé.

Ainsi, l'invention permet au porteur et propriétaire de la montre 200 de pouvoir être authentifié auprès de tous les serveurs distants des fournisseurs de prestation de service sur la seule base de son identification à partir d'une interaction entre le porteur de cette montre et une représentation graphique comprise dans ladite montre 100 et ce, sans avoir à saisir directement l'élément d'authentification spécifique à chacun de ces serveurs 200 afin de pouvoir s'authentifier auprès du prestataire de service correspondant.

## Revendications

1. Procédé de connexion sécurisée d'une montre (100) à un serveur distant (200) d'un fournisseur de prestation de service comportant les étapes suivantes :
- authentification (10) du porteur de la montre (100) autorisant un accès à l'utilisation de fonctions de cette montre (100), et
- sélection (11) d'une desdites fonctions à partir d'une interface de saisie de ladite montre visant à réaliser un établissement d'une connexion entre ladite montre (100) et le serveur distant (200) ;
- identification (12) du porteur de la montre (100) à partir d'une interaction entre le porteur de cette montre et une représentation graphique comprise dans ladite montre (100) ;
- transmission (22) audit serveur distant (200) d'un élément d'authentification relatif à la fonction sélectionnée dès lors que le porteur est identifié, et
- réalisation d'une authentification (24) du porteur par le serveur distant (200) à partir dudit élément d'authentification en vue d'autoriser un échange de données entre la montre (100) et ce serveur distant (200),
**caractérisé en ce que** ladite étape d'identification (12) est effectuée systématiquement à la suite de la sélection d'une fonction et comprend une sous-étape de présentation (13) d'une représentation graphique (7) sur/dans l'interface de diffusion d'une information visuelle 3 de ladite montre (100), cette sous-étape (13) comportant une phase de génération (14) de l'affichage, sur/dans l'interface de diffusion d'une information visuelle (3), de la représentation graphique 7 prévue pour la mise en œuvre de cette identification, cette phase (14) comprenant une sous-phase de sélection par un porteur de la montre parmi un échantillon d'au moins deux représentations graphiques (7) affichées sur l'interface de diffusion, de la représentation graphique (7) prévue pour la mise en œuvre de cette identification, ledit porteur étant le seul à connaitre la représentation graphique (7) qu'il a choisi lors d'un processus de configuration relative à cette identification.

2. Procédé selon la revendication précédente, **caractérisé en ce que** l'étape de transmission (22) comprend une sous-étape de sélection (23) de l'élément d'authentification relatif à ladite fonction sélectionnée en prévision de son envoi au serveur distant (200) et ce, parmi des éléments d'authentification archivés dans les éléments de mémoire (6) de l'unité de traitement (2) de la montre (100).

3. Procédé selon l'une quelconque des revendications précédentes, **caractérisé en ce que** l'étape de réalisation d'une authentification (24) comprend une sous-étape de comparaison (25) entre l'élément d'authentification reçu de la montre (100) et un élément d'authentification de référence (32) archivé dans le serveur 200.

4. Procédé selon l'une quelconque des revendications précédentes, **caractérisé en ce que** l'étape d'identification (12) comprend une sous-étape de présentation (13) d'une représentation graphique (7) sur une interface de diffusion d'une information visuelle (3) de ladite montre (100).

5. Procédé selon la revendication précédente **caractérisé en ce que** la sous-étape de présentation (13) comprend une phase de génération (14) de l'affichage de la représentation graphique (7) sur l'interface de diffusion d'une information visuelle (3).

6. Procédé selon la revendication précédente **caractérisé en ce que** la sous-étape de présentation (13) comprend une phase de déclenchement (15) d'un compte à rebours dès lors que la phase de génération (14) est réalisée.

7. Procédé selon la revendication précédente **caractérisé en ce que**, l'étape d'identification (12) comprend une sous-étape de sélection (16) dans un intervalle de temps limité d'une séquence d'au moins deux portions d'identification comprises dans ladite représentation graphique (7) visant à identifier ledit porteur, ladite séquence correspondant à un code d'identification du porteur.

8. Procédé selon la revendication précédente **caractérisé en ce que**, l'étape d'identification (12) comprend une sous-étape validation (18) de la séquence sélectionnée.

9. Procédé selon la revendication précédente **caractérisé en ce que** la sous-étape validation (18) comprend une phase de contrôle (19) que la sélection de la séquence de portions d'identification a été réalisée dans l'intervalle de temps limité défini par un compte à rebours.

10. Système (1) de connexion sécurisée d'une montre (100) à un serveur distant mettant en œuvre le procédé selon l'une quelconque des revendications précédentes, la montre (100) comprenant les éléments suivants reliés entre eux : une unité de traitement (2), une interface de saisie (34), une interface de diffusion d'une information visuelle (3) et une interface de communication sans fil pour des échanges de données avec ledit serveur distant (200).

11. Programme d'ordinateur comprenant des instructions de code de programme pour l'exécution des étapes (10 à 25) du procédé selon l'une quelconque des revendications 1 à 9 lorsque ledit programme est exécuté par les unités de traitement (2) de la montre (100) et d'un serveur distant (200) en connexion avec ladite montre (100).

## Patentansprüche

1. Verfahren zum sicheren Verbinden einer Uhr (100) mit einem Fernserver (200) eines Service-Providers, das die folgenden Schritte umfasst:
- Authentifizieren (10) des Trägers der Uhr (100), um den Zugriff auf die Verwendung der Funktionen der Uhr (100) zu ermöglichen, und
- Auswählen (11) einer der Funktionen von einer Eingabeschnittstelle auf der Uhr, um eine Verbindung zwischen der Uhr (100) und dem Fernserver (200) herzustellen;
- Identifizieren (12) des Trägers der Uhr (100) basierend auf einer Interaktion zwischen dem Träger dieser Uhr und einer in der Uhr (100) enthaltenen grafischen Darstellung;
- Übertragen (22) an den Fernserver (200) eines Authentifizierungselements, das sich auf die ausgewählte Funktion bezieht, sobald der Träger identifiziert wurde, und
- Authentifizieren (24) des Trägers durch den Fernserver (200) unter Verwendung des Authentifizierungselements, um einen Datenaustausch zwischen der Uhr (100) und diesem Fernserver (200) zu autorisieren,
**dadurch gekennzeichnet, dass** der Identifizierungsschritt (12) systematisch nach der Auswahl einer Funktion ausgeführt wird und einen Unterschritt (13) umfasst, der, an/in der Übertragungsschnittstelle, die Präsentation einer grafischen Darstellung (7) einer visuellen Information 3 von der Uhr (100) beinhaltet, wobei dieser Unterschritt (13) eine Phase (14) umfasst, die, an/in der Übertragungsschnittstelle, die Erzeugung der Anzeige von einer visuellen Information (3) aus der grafischen Darstellung 7, die für die Implementierung dieser Identifikation bereitgestellt wird, beinhaltet, wobei diese Phase (14) eine Unterphase umfasst, in der ein Träger der Uhr aus einem Beispiel von mindestens zwei grafischen Darstellungen (7), die auf der Übertragungsschnittstelle angezeigt werden, die grafische Darstellung (7), die für die Implementierung dieser Identifikation bereitgestellt wird, auswählt, wobei der Träger der Einzige ist, der die grafische Darstellung (7) kennt, die er in einem Konfigurationsprozess ausgewählt hat, der sich auf diese Identifikation bezieht.

2. Verfahren nach dem vorhergehenden Anspruch, **dadurch gekennzeichnet, dass** der Übertragungsschritt (22) einen Unterschritt (23) umfasst, in dem das Authentifizierungselement, das sich auf die ausgewählte Funktion bezieht, aus Authentifizierungselementen ausgewählt wird, die in den Speicherelementen (6) der Verarbeitungseinheit (2) der Uhr (100) gespeichert sind, und zwar in Erwartung, dass sie an den Fernserver (200) gesendet werden.

3. Verfahren nach einem der vorhergehenden Ansprüche, **dadurch gekennzeichnet, dass** der Authentifizierungsschritt (24) einen Unterschritt (25) umfasst, in dem das von der Uhr (100) empfangene Authentifizierungselement mit einem in dem Server 200 gespeicherten Referenz-Authentifizierungselement (32) verglichen wird.

4. Verfahren nach einem der vorhergehenden Ansprüche, **dadurch gekennzeichnet, dass** der Identifizierungsschritt (12) einen Unterschritt (13) umfasst, in dem eine grafische Darstellung (7) einer visuellen Information (3) von der Uhr (100) auf einer Übertragungsschnittstelle dargestellt wird.

5. Verfahren nach dem vorhergehenden Anspruch, **dadurch gekennzeichnet, dass** der Präsentationsunterschritt (13) eine Phase (14) umfasst, in der die grafische Darstellung (7) der visuellen Information (3) zur Anzeige auf der Übertragungsschnittstelle erzeugt wird.

6. Verfahren nach dem vorhergehenden Anspruch, **dadurch gekennzeichnet, dass** der Präsentationsunterschritt (13) eine Phase (15) umfasst, in der ein Countdown ausgelöst wird, wenn die Erzeugungsphase (14) abgeschlossen ist.

7. Verfahren nach dem vorhergehenden Anspruch, **dadurch gekennzeichnet, dass** der Identifizierungsschritt (12) einen Unterschritt (16) umfasst, der die Auswahl einer Sequenz von mindestens zwei Identifizierungsabschnitten, die in der grafischen Darstellung (7) zum Identifizieren des Trägers enthalten sind, innerhalb eines begrenzten Zeitrahmens beinhaltet, wobei die Sequenz einem Identifizierungscode des Trägers entspricht.

8. Verfahren nach dem vorhergehenden Anspruch, **dadurch gekennzeichnet, dass** der Identifizierungsschritt (12) einen Unterschritt (18) umfasst, in dem die ausgewählte Sequenz validiert wird.

9. Verfahren nach dem vorhergehenden Anspruch, **dadurch gekennzeichnet, dass** der Validierungsunterschritt (18) eine Phase (19) umfasst, in der die Auswahl der Sequenz von Identifikationsabschnitten überprüft wird, um sicherzustellen, dass sie innerhalb des begrenzten Zeitrahmens ausgeführt wurde, der durch einen Countdown definiert ist.

10. System (1) zum sicheren Verbinden einer Uhr (100) mit einem Fernserver unter Verwendung des Verfahrens nach einem der vorhergehenden Ansprüche, wobei die Uhr (100) die folgenden miteinander verbundenen Elemente aufweist: eine Verarbeitungseinheit (2), eine Eingabeschnittstelle (34), eine Schnittstelle (3) zur Übertragung einer visuellen Information und eine drahtlose Kommunikationsschnittstelle zum Datenaustausch mit dem Fernserver (200).

11. Computerprogramm, das Programmcodeanweisungen zum Ausführen der Schritte (10 bis 25) des Verfahrens nach einem der Ansprüche 1 bis 9 umfasst, wenn das Programm von den Verarbeitungseinheiten (2) in der Uhr (100) und von einem mit der Uhr (100) verbundenen Fernserver (200) ausgeführt wird.

## Claims

1. A method for securely connecting a watch (100) to a remote server (200) of a service provider comprising the following steps:
- authenticating (10) the wearer of the watch (100) to enable access to the use of the functions of the watch (100), and
- selecting (11) one of said functions from an input interface on said watch to establish a connection between said watch (100) and the remote server (200);
- identifying (12) the wearer of the watch (100) based on an interaction between the wearer of this watch and a graphical representation comprised in said watch (100);
- transmitting (22) to said remote server (200) an authentication element relating to the selected function once the wearer has been identified, and
- authenticating (24) the wearer by the remote server (200) using the authentication element in order to authorise an exchange of data between the watch (100) and this remote server (200),
**characterised in that** said identification step (12) is carried out systematically after the selection of a function and comprises a sub-step (13) involving the presentation, on/in the transmission interface, of a graphical representation (7) of an item of visual information 3 from said watch (100), this sub-step (13) comprising a phase (14) involving the generation of the display, on/in the transmission interface, of an item of visual information (3) from the graphical representation 7 provided for the implementation of this identification, this phase (14) comprising a sub-phase in which a wearer of the watch selects, from a sample of at least two graphical representations (7) displayed on the transmission interface, the graphical representation (7) provided for the implementation of this identification, said wearer being the only one to know the graphical representation (7) he chose in a configuration process relating to this identification.

2. The method according to the preceding claim, **characterised in that** the transmission step (22) comprises a sub-step (23) in which the authentication element relating to said selected function is selected from among authentication elements stored in the memory elements (6) of the processing unit (2) of the watch (100), in anticipation of its being sent to the remote server (200).

3. The method according to any of the preceding claims, **characterised in that** the authentication step (24) comprises a sub-step (25) in which the authentication element received from the watch (100) is compared with a reference authentication element (32) stored in the server 200.

4. The method according to any of the preceding claims, **characterised in that** the identification step (12) comprises a sub-step (13) in which a graphical representation (7) of an item of visual information (3) from said watch (100) is presented on a transmission interface.

5. The method according to the preceding claim, **characterised in that** the presentation sub-step (13) comprises a phase (14) in which the graphical representation (7) of the visual item of information (3) is generated for display on the transmission interface.

6. The method according to the preceding claim, **characterised in that** the presentation sub-step (13) comprises a phase (15) in which a countdown is triggered when the generation phase (14) has been completed.

7. The method according to the preceding claim, **characterised in that** the identification step (12) comprises a sub-step (16) involving the selection, within a limited time frame, of a sequence of at least two identification portions comprised in said graphical representation (7) for identifying said wearer, said sequence corresponding to an identification code of the wearer.

8. The method according to the preceding claim, **characterised in that** the identification step (12) comprises a sub-step (18) in which the selected sequence is validated.

9. The method according to the preceding claim, **characterised in that** the validation sub-step (18) comprises a phase (19) in which the selection of the sequence of identification portions is checked to ensure that it has been carried out within the limited time frame defined by a countdown.

10. A system (1) for securely connecting a watch (100) to a remote server using the method according to any of the preceding claims, the watch (100) comprising the following interconnected elements: a processing unit (2), an input interface (34), an interface (3) for the transmission of visual information, and a wireless communication interface for exchanging data with said remote server (200).

11. A computer program comprising program coding instructions for carrying out the steps (10 to 25) of the method according to any of claims 1 to 9 when said program is executed by the processing units (2) in the watch (100) and by a remote server (200) connected with said watch (100).
